# EUROPEAN PATENT APPLICATION

(11) **EP 3 828 686 A1**
(43) Date of publication of application: **02.06.2021**
(21) Application number: 20209505.5
(22) Date of filing: 24.11.2020
(51) Int. Cl.: G06F 3/0488, G06F 3/0481

(54) **ELECTRONIC DEVICE AND METHOD AND APPARATUS FOR OPERATING SAME**

(30) Priority: 26.11.2019 CN 201911173581
(71) Applicant: BSH Hausgeräte GmbH, 81739 München (DE)
(72) Inventor: Chen, Huibo, Nanjing, 210046 (CN); Liu, Qing(Wuxi), Wuxi City, 214028 (CN)

(57) **Abstract**

Embodiments of this application provide a method for operating an electronic device, an apparatus for operating an electronic device, and an electronic device. The electronic device includes a touch screen and the touch screen displays at least two icons. The at least two icons are adapted to be touched to operate different programs respectively. The method includes: obtaining the numbers of use times of the programs in a preset first cycle; comparing the numbers of use times of the programs to determine a program with the largest number of use times as a commonly used program; and increasing a current area of an icon corresponding to the commonly used program. The area of the icon is selectively adjusted according to the number of use times of a user, reducing selection time of the commonly used program and subprograms thereof, thereby improving operation efficiency.

## Description

The present invention relates to the field of electronic devices, and in particular, to an electronic device including a touch screen, a method for operating an electronic device and an apparatus for operating an electronic device.

The current electronic devices such as mobile phones, computers and program-controlled laundry devices each have a touch screen. An icon may be displayed on the touch screen and function as a shortcut for operating a related program in an electronic device. When an icon is touched, a program corresponding to the icon can be operated. A plurality of icons may be displayed on the touch screen at the same time, and the icons correspond to different programs respectively.

However, the icons are in a static layout and consequently cannot meet a requirement of customization.

The technical problem to be resolved in embodiments of the present invention is that icons of an electronic device cannot meet the requirement of customization.

To resolve the foregoing technical problem, an embodiment of the present invention provides a method for operating an electronic device. The electronic device includes a touch screen and the touch screen displays at least two icons. The at least two icons are adapted to be touched to operate different programs respectively. The method includes: obtaining the numbers of use times of the programs in a preset first cycle; comparing the numbers of use times of the programs to determine a program with the largest number of use times as a commonly used program; and increasing a current area of an icon corresponding to the commonly used program.

Optionally, step 1, step 2 and step 3 are performed repeatedly in a preset second cycle.

Optionally, the method includes: comparing the number of use times of the commonly used program with a preset number of times; and if the number of use times of the commonly used program is less than the preset number of times, skipping changing the current area of the icon corresponding to the commonly used program; otherwise increasing the current area of the icon corresponding to the commonly used program.

Optionally, the method includes: comparing the current area of the icon corresponding to the commonly used program with a preset area; and if the current area is not less than the preset area, skipping changing the current area of the icon corresponding to the commonly used program; otherwise increasing the current area of the icon corresponding to the commonly used program.

Optionally, the icon is a circle, and the increasing the area of the icon corresponding to the commonly used program is increasing a diameter of the circle.

Optionally, the increasing a diameter of the circle is making an increment of the diameter equal to a quotient of dividing a product of the original diameter of the circle and the number of use times of the commonly used program in the first cycle by the number of use times of all the programs.

Optionally, the icon is a rectangle, and the increasing the area of the icon corresponding to the commonly used program is increasing at least one side length of the rectangle.

Optionally, the method includes: determining a program with the least number of use times as an uncommonly used program, and reducing a current area of an icon corresponding to the uncommonly used program.

Optionally, the method includes enabling a position of any one of the at least two icons to float randomly on the touch screen.

Optionally, the electronic device is a laundry device, and the programs are laundry programs.

Optionally, the laundry programs include a fast laundry program, a mixed laundry program, a chemical fiber laundry program, an outdoor jacket laundry program, a cotton fabric laundry program and a single-dehydration program.

Optionally, the electronic device is a laundry device, and the programs are subprograms of a laundry program.

Optionally, the subprograms of the laundry program include a temperature adjustment subprogram, a spin speed adjustment subprogram, a high water level adjustment subprogram, an acceleration adjustment subprogram and a rinse adjustment subprogram.

An embodiment of the present invention further provides an apparatus for operating an electronic device. The electronic device includes a touch screen and the touch screen displays at least two icons. The at least two icons are adapted to be touched to operate different programs respectively. The apparatus includes an obtaining module, adapted to obtain the numbers of use times of the programs in a preset first cycle, a first determination module, adapted to compare the numbers of use times of the programs to determine a program with the largest number of use times as a commonly used program, and an increasing module, adapted to increase a current area of an icon corresponding to the commonly used program.

Optionally, the apparatus includes a first comparing module, adapted to compare the number of use times of the commonly used program with a preset number of times, and a first processing module, adapted to: if the number of use times of the commonly used program is less than the preset number of times, skip changing the current area of the icon corresponding to the commonly used program; otherwise increase the current area of the icon corresponding to the commonly used program.

Optionally, the apparatus includes a second comparing module, adapted to compare the current area of the icon corresponding to the commonly used program with a preset area, and a second processing module, adapted to: if the current area is not less than the preset area, skip changing the current area of the icon corresponding to the commonly used program; otherwise increase the current area of the icon corresponding to the commonly used program.

Optionally, the apparatus includes a second determination module, adapted to determine a program with the least number of use times as an uncommonly used program, and a reduction module, adapted to reduce a current area of an icon corresponding to the uncommonly used program.

Optionally, the apparatus includes a setting module, adapted to enable a position of any one of the at least two icons to float randomly on the touch screen.

Optionally, the electronic device is a laundry device, and the programs are laundry programs or subprograms of a laundry program.

An embodiment of the present invention further provides an electronic device, including a touch screen. The touch screen displays at least two icons, and the at least two icons are adapted to be touched to operate different programs respectively. The electronic device further includes the foregoing apparatus.

Optionally, the electronic device is a laundry device, and the programs are laundry programs or subprograms of a laundry program.

Compared with the prior art, the technical solutions of the embodiments of the present invention have beneficial effects. For example, in the technical solutions of the present invention, an area of an icon is selectively adjusted according to the number of use times of a user, reducing selection time of the commonly used program and subprograms thereof, thereby improving operation efficiency.
FIG. 1 is a flowchart of a method for operating an electronic device according to an embodiment of the present invention;
FIG. 2 is a schematic diagram of changes of icons corresponding to laundry programs on a touch screen of a laundry device according to an embodiment of the present invention;
FIG. 3 is a schematic diagram of changes of icons corresponding to laundry subprograms on a touch screen of a laundry device according to an embodiment of the present invention;
FIG. 4 is a schematic structural diagram of an apparatus for operating an electronic device according to an embodiment of the present invention; and
FIG. 5 is a schematic structural diagram of an electronic device according to an embodiment of the present invention.

An electronic device involved in an embodiment of the present invention belongs to an information processing device, and the electronic device may be a mobile phone, a computer and a household appliance, but is not limited to the devices; the electronic device includes a touch screen configured to display and to interact with a user.

The touch screen may be a screen physically mounted on the electronic device; and the touch screen may alternatively be a screen physically mounted on a terminal device. The terminal device is adapted to communicate with the electronic device in real time in a wired or wireless manner. An application program of the electronic device is installed in the terminal device and an operation interface of the electronic device can be displayed by opening the application program. After the terminal device is connected to the electronic device, the terminal device receives parameters of icons of the electronic device and displays current areas of the icons in the current operation interface of the electronic device. The user can operate the icons on the terminal device, and the areas of the icons may also be changed based on the numbers of use times. Therefore, in terms of user operation and technical implementation, the touch screen on the terminal device may be understood as a touch screen, of the electronic device, extending by a certain distance. Compared with the touch screen mounted on the electronic device, the touch screen mounted on the terminal device has benefits such as portability, easy remote operations and a relatively large screen.

As known in the field, by using the touch screen, the user can query information, send a message, perform a task, and the like. The icons displayed on the touch screen may correspond to the programs of an operation device respectively; on the touch screen, at least two icons may be displayed to help the user to touch and select according to needs to perform different operations.

After an icon of a specific program is touched, for different electronic devices, the program may be executed directly, or an icon of a subprogram of the program may be displayed. The subprogram may be a program through which the device is operated, and may alternatively be an operation option through which parameters of the program are adjusted; the icon of the subprogram can be further touched, and similarly, the subprogram may be executed directly, or icons of several slave programs in the subprogram may be displayed, where the slave programs may be programs through which the device is operated, and may alternatively be operation options through which parameters of the subprogram are adjusted.

In some embodiments, the electronic device is a laundry device. The foregoing programs are laundry programs of processing clothing and other objects, including washing programs of cleaning the clothing and other objects, a single-dehydration program merely used for dehydration, a drying program used for drying the clothing and other objects, and the like, where the washing programs include a fast laundry program, a mixed laundry program, a chemical fiber laundry program, an outdoor jacket laundry program, a cotton fabric laundry program, and the like; the laundry programs may further include subprograms, for example, a temperature adjustment subprogram, a spin speed adjustment subprogram, a high water level adjustment subprogram, an acceleration adjustment subprogram and a rinse adjustment subprogram. The clothing and other objects include clothes, bed sheets, shoes, hats, mops, cleaning cloths, floor mats, carpets, and the like.

To make the objectives, features and beneficial effects of embodiments of the present invention more comprehensible, the following describes the embodiments of the present invention in detail with reference to the accompanying drawings.

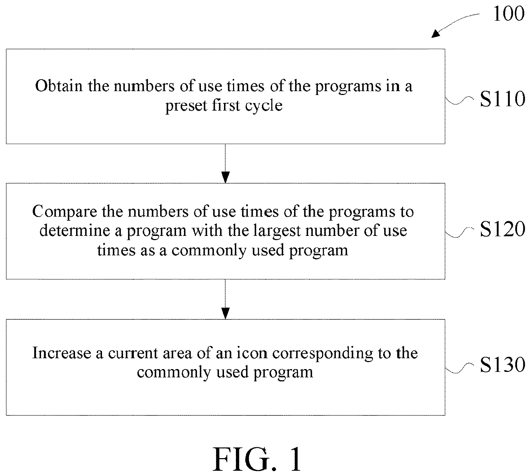

FIG. 1 is a flowchart of a method 100 for operating an electronic device according to an embodiment of the present invention, including the following steps:
Step S110: Obtain the numbers of use times of the programs in a preset first cycle.
Step S120: Compare the numbers of use times of the programs to determine a program with the largest number of use times as a commonly used program.
Step S130: Increase a current area of an icon corresponding to the commonly used program.

During the implementation of step S110, the numbers of use times of the programs in the preset first cycle are obtained, where the programs are programs respectively corresponding to the icons displayed in the touch screen at the same time, and the first cycle may be set according to operation frequency of the electronic device. For example, for an electronic device that is operated frequently (such as a mobile phone), the first cycle may be set on days or weeks as a unit, for example, one day, two days, three days or one week, and for an electronic device that is not operated frequently (such as some household appliances), the first cycle may be set on weeks or months as a unit, for example, one week, two weeks, three weeks, one month or three months.

During the implementation of step S120, the numbers of use times of the programs are compared to determine the program with the largest number of use times as the commonly used program, where based on the numbers of use times of the programs in the first cycle obtained during the implementation of step S110, the numbers of use times corresponding to the programs are compared, so that the program with the largest number of use times is obtained, and the program with the largest number of use times is determined as the commonly used program.

During the implementation of step S130, the current area of the icon corresponding to the commonly used program is increased. The icon has an initial area, and the initial area may be an area of the icon of the electronic device during delivery, and may alternatively be an area of the icon after the user resets the electronic device; in some embodiments, the icons displayed on the touch screen at the same time have the same initial area, while in some other embodiments, the icons displayed on the touch screen at the same time have different initial areas. For example, in a laundry device sold in a hot region or summer, the initial area of the icon corresponding to the fast laundry program is larger than that of the icon corresponding to another laundry program, and in a laundry device sold in a cold region or winter, the initial area of the icon corresponding to the cotton fabric laundry program is larger than that of the icon corresponding to another laundry program. The icon further has a current area, and the current area is an area of the icon when the electronic device is operated and the area of the icon has not been adjusted.

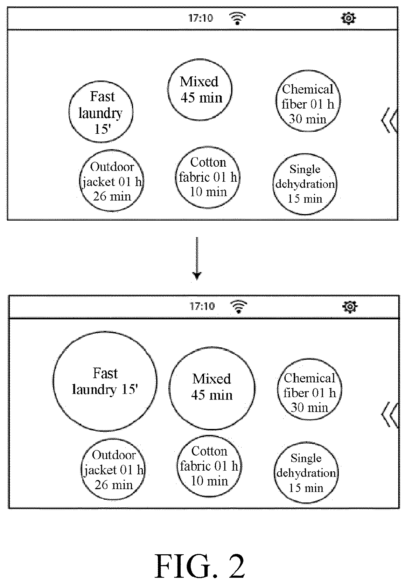

In an embodiment shown in FIG. 2, the electronic device is a laundry device, and the programs include laundry programs. A plurality of icons are displayed on a touch screen of the laundry device, and respectively correspond to laundry programs such as a fast laundry program, a mixed laundry program, a chemical fiber laundry program, an outdoor jacket laundry program, a cotton fabric laundry program and a single-dehydration program.

Although in FIG. 2, washing time such as 15 min, 45 min, 01 h 10 min, 01 h 26 min and 01 h 30 min is labeled on the icons respectively, the corresponding washing time is not limited thereto. In an initial state, for example, a state of the laundry device during delivery or a real-time state after a user resets the laundry device, the icons of the laundry programs have the same area. During operations in a period of time, the mixed laundry program has been set to a commonly used program for a plurality of times, and corresponds to an icon having a relatively large current area, and the fast laundry program has been set to the commonly used program for many times, and corresponds to an icon having a largest current area.

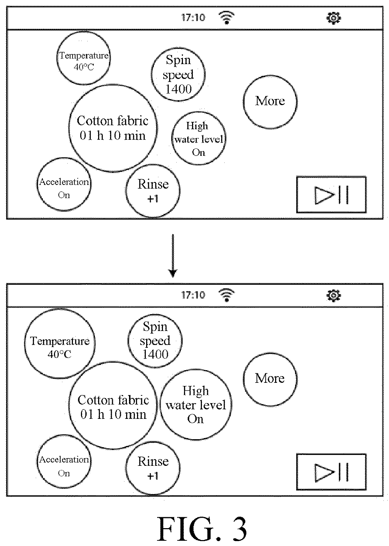

In an embodiment shown in FIG. 3, the electronic device is a laundry device, and the programs are subprograms of the cotton fabric laundry program. A plurality of icons are displayed on a touch screen of the laundry device, and respectively correspond to a plurality of subprograms (or referred to as "operation options") of the cotton fabric laundry program, including a temperature adjustment subprogram, a spin speed adjustment subprogram, a high water level adjustment subprogram, an acceleration adjustment subprogram, a rinse adjustment subprogram, and the like. Although in FIG. 3, parameters are labeled on the icons respectively, the corresponding parameters are not limited thereto. In an initial state, for example, a state of the laundry device during delivery or a real-time state after a user resets the laundry device, the icons of the subprograms have the same area. During operations in a period of time, both of the temperature adjustment subprogram and the high water level adjustment subprogram have been set to commonly used programs for a plurality of times, so that the current areas of the icons corresponding to the two subprograms are both relatively large. The icon of "cotton fabric" may be touched to return to an operation interface of the laundry program; an icon "|>||" may be touched to perform a laundry process of the cotton fabric laundry program, and the icon "|>||" may alternatively be touched again to suspend the laundry process.

In some embodiments, the icons may have various shapes. In a specific embodiment, the icon may be a circle, and increasing the area of the icon corresponding to the commonly used program is increasing a diameter of the circle. For example, the increasing a diameter of the circle is making an increment of the diameter equal to a quotient of dividing a product of the original diameter of the circle and the number of use times of the commonly used program in the first cycle by the number of use times of all the programs; the icon may alternatively be a rectangle, and the increasing the area of the icon corresponding to the commonly used program is increasing at least one side length of the rectangle.

Because the current area of the icon corresponding to the commonly used program is increased, when facing and operating the touch screen, the user can obtain prompt information related to the commonly used program directly according to the increased area of the icon; in addition, the user can further touch the icon with the increased area, helping the user to operate quickly and effectively.

In some embodiments, several programs with the relatively large numbers of use times in the first cycle may be determined as secondary commonly used programs (for example, a program with the second largest number of use times (that is, only secondary to the number of use times of the commonly used program) is determined as the secondary commonly used program), and a current area of an icon corresponding to the secondary commonly used program is increased, but the area of the icon corresponding to the secondary commonly used program increased each time is less than that of the icon corresponding to the commonly used program increased each time. Because the current area of the icon corresponding to the secondary commonly used program is increased, when facing and operating the touch screen, the user can obtain prompt information related to the secondary commonly used program directly according to the increased area of the icon; in addition, the user can touch the icon with the increased area, helping the user to operate quickly and effectively.

In some embodiments, the icons displayed on the touch screen may be static, float or wobble. The icon corresponding to the commonly used program may float or wobble, while icons of other programs are static, so that when facing and operating the touch screen, the user can obtain prompt information related to the commonly used program directly according to the floating or wobbly icon. In a specific embodiment, a position of every icon displayed on the touch screen floats randomly.

In some embodiments, a program with the least number of use times may be determined as an uncommonly used program, and a current area of an icon corresponding to the uncommonly used program is reduced; further, a program with the less number of use times may be determined as a less commonly used program, and a current area of an icon corresponding to the less commonly used program is reduced. On the touch screen, compared with the number of the commonly used programs, the number of the uncommonly used programs and the less commonly used programs is usually larger. Through the reduction of the current areas of the uncommonly used programs and the less commonly used programs, the touch screen can be relatively small in size, so that the electronic device can be relatively small in size and relatively low in costs.

Different users may operate the device, and operation habits of the users may also vary. Using the laundry device as an example, in different seasons, the commonly used programs may be different. For example, in summer, the fast laundry program may be the commonly used program, while in winter, the cotton fabric laundry program may be the commonly used program. Therefore, step S110, step S120 and step S130 are performed repeatedly in a preset second cycle to determine the commonly used program periodically. The second cycle may be set according to operation frequency of the electronic device. For example, for an electronic device that is operated frequently (such as a mobile phone), the second cycle may be set on days or weeks as a unit, for example, one day, two days, three days or one week, and for an electronic device that is not operated frequently (such as some household appliances), the second cycle may be set on weeks or months as a unit, for example, one week, two weeks, three weeks, one month or three months.

For the programs respectively corresponding to the icons displayed on the touch screen at the same time, in the preset first cycle, the number of use times of the commonly used program may not be large, so that the current area of the commonly used program may be unnecessarily adjusted; in this case, a predetermined number of use times may be set (referred to as a "preset number of times"). The number of use times of the commonly used program and the preset number of times are compared. If the number of use times of the commonly used program is less than the preset number of times, changing the current area of the icon corresponding to the commonly used program is skipped; otherwise the current area of the icon corresponding to the commonly used program is increased. For different electronic devices, the preset number of times may be set according to operation frequency of the electronic devices. For example, for an electronic device that is operated frequently (such as a mobile phone), the preset number of times may be set to 15 times, 25 times, 50 times or the like, and for an electronic device that is not operated frequently (such as some household appliances), the preset number of times may be set to three times, five times, 10 times or the like.

For the programs respectively corresponding to the icons displayed on the touch screen at the same time, in the preset first cycle, the commonly used program is determined. The current area of the icon corresponding to the commonly used program may be relatively large, so that the current area of the icon corresponding to the commonly used program may not be changed; in this case, a predetermined area may be set (referred to as a "preset area"). The current area of the icon corresponding to the commonly used program and the preset area are compared. If the current area is not less than the preset area, changing the current area of the icon corresponding to the commonly used program is skipped; otherwise the current area of the icon corresponding to the commonly used program is increased. For touch screens with different sizes or different electronic devices, the preset areas may be different. For example, the preset area may be four square centimeters, six square centimeters, nine square centimeters, 12 square centimeters or the like; the preset area may alternatively be set to twice, three times, four times or the like as large as an initial area of the icon.

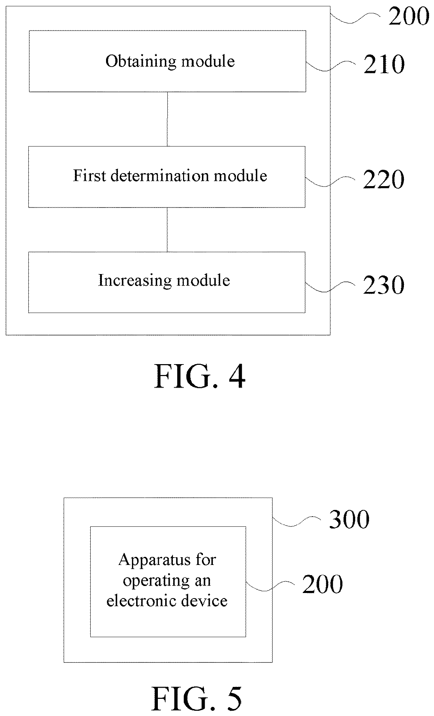

FIG. 4 is a schematic structural diagram of an apparatus 200 for operating an electronic device according to an embodiment of the present invention. The electronic device includes a touch screen, the touch screen displays at least two icons, and the at least two icons are adapted to be touched to operate different programs respectively; the electronic device may be a laundry device, and the programs may be laundry programs or subprograms of a laundry program.

The apparatus 200 includes an obtaining module 210, a first determination module 220 and an increasing module 230, where the obtaining module 210 is adapted to obtain the numbers of use times of the programs in a preset first cycle; the first determination module 220 is adapted to compare the numbers of use times of the programs to determine a program with the largest number of use times as a commonly used program, and the increasing module 230 is adapted to increase a current area of an icon corresponding to the commonly used program.

Further, the apparatus 200 includes a first comparing module and a first processing module, where the first comparing module is adapted to compare the number of use times of the commonly used program with a preset number of times, and the first processing module is adapted to: if the number of use times of the commonly used program is less than the preset number of times, skip changing the current area of the icon corresponding to the commonly used program; otherwise increase the current area of the icon corresponding to the commonly used program.

Further, the apparatus 200 includes a second comparing module and a second processing module, where the second comparing module is adapted to compare the current area of the icon corresponding to the commonly used program with a preset area, and the second processing module is adapted to: if the current area is not less than the preset area, skip changing the current area of the icon corresponding to the commonly used program; otherwise increase the current area of the icon corresponding to the commonly used program.

Further, the apparatus 200 includes a second determination module and a reduction module, where the second determination module is adapted to determine a program with the least number of use times as an uncommonly used program; and the reduction module is adapted to reduce a current area of an icon corresponding to the uncommonly used program.

Further, the apparatus 200 includes a setting module, adapted to enable a position of any one of the at least two icons to float randomly on the touch screen.

For the specific modules, a relationship between the modules and implementations of the apparatus 200, reference may be made to the foregoing related descriptions about the method 100 for operating an electronic device with reference to FIG. 1. Details are not described herein again.

FIG. 5 is a schematic structural diagram of an electronic device 300 according to an embodiment of the present invention. The electronic device 300 includes a touch screen, the touch screen displays at least two icons, and the at least two icons are adapted to be touched to operate different programs respectively, where the electronic device 300 includes the foregoing apparatus 200.

In some embodiments, the electronic device 300 may be a laundry device, and the programs are laundry programs or subprograms of a laundry program.

Although the disclosure of the present invention is as described above, the present invention is not limited herein. A person skilled in the art may make various modifications and variations without departing from the spirit and scope of the present invention. Thus, the protection scope of the present invention should be subject to the scope limited by the claims.

## Claims

1. A method (100) for operating an electronic device, the electronic device comprising a touch screen, the touch screen displaying at least two icons, the at least two icons being adapted to be touched to operate different programs respectively, **characterized in that** the method comprises:
step 1 (S110): obtaining the numbers of use times of the programs in a preset first cycle;
step 2 (S120): comparing the numbers of use times of the programs to determine a program with the largest number of use times as a commonly used program; and
step 3 (S130): increasing a current area of an icon corresponding to the commonly used program.

2. The method (100) according to claim 1, **characterized in that** step 1 (S110), step 2 (S120) and step 3 (S130) are performed repeatedly in a preset second cycle.

3. The method (100) according to claim 1, **characterized by** comprising:
comparing the number of use times of the commonly used program with a preset number of times; and
if the number of use times of the commonly used program is less than the preset number of times, skipping changing the current area of the icon corresponding to the commonly used program; otherwise increasing the current area of the icon corresponding to the commonly used program.

4. The method (100) according to claim 1, **characterized by** comprising:
comparing the current area of the icon corresponding to the commonly used program with a preset area; and
if the current area is not less than the preset area, skipping changing the current area of the icon corresponding to the commonly used program; otherwise increasing the current area of the icon corresponding to the commonly used program.

5. The method (100) according to claim 1, **characterized in that** the icon is a circle, and the increasing an area of an icon corresponding to the commonly used program is increasing a diameter of the circle.

6. The method (100) according to claim 5, **characterized in that** the increasing a diameter of the circle is making an increment of the diameter equal to a quotient of dividing a product of the original diameter of the circle and the number of use times of the commonly used program in the first cycle by the number of use times of all the programs.

7. The method (100) according to claim 1, **characterized in that** the icon is a rectangle, and the increasing an area of an icon corresponding to the commonly used program is increasing at least one side length of the rectangle.

8. The method (100) according to claim 1, **characterized by** comprising:
determining a program with the least number of use times as an uncommonly used program; and
reducing a current area of an icon corresponding to the uncommonly used program.

9. The method (100) according to claim 1, **characterized by** comprising: enabling a position of any one of the at least two icons to float randomly on the touch screen.

10. The method (100) according to any one of claims 1 to 9, **characterized in that** the electronic device is a laundry device, and the programs are laundry programs.

11. The method (100) according to claim 10, **characterized in that** the laundry programs comprise a fast laundry program, a mixed laundry program, a chemical fiber laundry program, an outdoor jacket laundry program, a cotton fabric laundry program and a single-dehydration program.

12. The method (100) according to any one of claims 1 to 9, **characterized in that** the electronic device is a laundry device, and the programs are subprograms of a laundry program.

13. The method (100) according to claim 12, **characterized in that** the subprograms of the laundry program comprise a temperature adjustment subprogram, a spin speed adjustment subprogram, a high water level adjustment subprogram, an acceleration adjustment subprogram and a rinse adjustment subprogram.

14. An apparatus (200) for operating an electronic device, the electronic device comprising a touch screen, the touch screen displaying at least two icons, the at least two icons being adapted to be touched to operate different programs respectively, **characterized in that** the apparatus (200) comprises:
an obtaining module (210), adapted to obtain the numbers of use times of the programs in a preset first cycle;
a first determination module (220), adapted to compare the numbers of use times of the programs to determine a program with the largest number of use times as a commonly used program; and
an increasing module (230), adapted to increase a current area of an icon corresponding to the commonly used program.

15. The apparatus (200) according to claim 14, **characterized by** comprising:
a first comparing module, adapted to compare the number of use times of the commonly used program with a preset number of times; and
a first processing module, adapted to: if the number of use times of the commonly used program is less than the preset number of times, skip changing the current area of the icon corresponding to the commonly used program; otherwise increase the current area of the icon corresponding to the commonly used program.

16. The apparatus (200) according to claim 14, **characterized by** comprising:
a second comparing module, adapted to compare the current area of the icon corresponding to the commonly used program with a preset area; and
a second processing module, adapted to: if the current area is not less than the preset area, skip changing the current area of the icon corresponding to the commonly used program; otherwise increase the current area of the icon corresponding to the commonly used program.

17. The apparatus (200) according to claim 14, **characterized by** comprising:
a second determination module, adapted to determine a program with the least number of use times as an uncommonly used program; and
a reduction module, adapted to reduce a current area of an icon corresponding to the uncommonly used program.

18. The apparatus (200) according to claim 14, **characterized by** comprising: a setting module, adapted to enable a position of any one of the at least two icons to float randomly on the touch screen.

19. The apparatus (200) according to any one of claims 14 to 18, **characterized in that** the electronic device is a laundry device, and the programs are laundry programs or subprograms of a laundry program.

20. An electronic device (300), comprising a touch screen, the touch screen displaying at least two icons, the at least two icons being adapted to be touched to operate different programs respectively, **characterized in that** the electronic device comprises the apparatus (200) according to any one of claims 14 to 18.

21. The electronic device (300) according to claim 20, **characterized in that** the electronic device is a laundry device, and the programs are laundry programs or subprograms of a laundry program.
